Europäisches Patentamt

European Patent Office

Office européen des brevets

(19)

(11) EP 0 845 685 A2

## (12) EUROPÄISCHE PATENTANMELDUNG

(43) Veröffentlichungstag:
03.06.1998 Patentblatt 1998/23

(51) Int Cl.6: G01S 7/41

(21) Anmeldenummer: 97440119.2

(22) Anmeldetag: 28.11.1997

(84) Benannte Vertragsstaaten:
AT BE CH DE DK ES FI FR GB GR IE IT LI LU MC NL PT SE
Benannte Erstreckungsstaaten:
AL LT LV MK RO SI

(30) Priorität: 29.11.1996 DE 19649563

(71) Anmelder: ALCATEL ALSTHOM COMPAGNIE GENERALE D'ELECTRICITE
75008 Paris (FR)

(72) Erfinder:
• Trompf, Michael, Dr.
71282 Hemmingen (DE)

• Raudonat, Ullrich
71732 Tamm (DE)
• Thierer, Gebhard, Dr.
71254 Ditzingen (DE)
• Strecker, Andreas
73066 Uhingen (DE)

(74) Vertreter: Schätzle, Albin, Dipl.-Phys. et al
Alcatel Alsthom
Intellectual Property Department,
Postfach 30 09 29
70449 Stuttgart (DE)

(54) **Vorrichtung und Verfahren zur automatischen Klassifikation von Objekten**

(57)     Zur automatischen Klassifikation von Objekten mittels Doppler-verbreiterter Radarecho-Signale werden neuronale Netze eingesetzt, die für jede Klassen einen Ausgangsknoten aufweisen.

Eine Vorrichtung zu automatischen Klassifikation von Objekten weist ein neuronales Netz (NET) mit einer Eingangsschicht (IL) aus Eingangsknoten (IN 1, ..., IN48) für Merkmale der Doppler-verbreiterten Radarecho-Signale und einer Ausgangsschicht (OL) aus Ausgangsknoten (ON1, ..., ON5; ON1, ..., ON6) für Klassen (K1, K2; K), denen die Objekte zugeordnet werden können, auf. Mindestens eine der Klassen (K1, K2; K) ist in mehrere Unterklassen (U11, U12, U21, U22, U23; U1, ..., U4), wobei für jede Unterklasse (U11, U12, U21, U22, U23; U1, ..., U4) ein Ausgangsknoten (ON1, ..., ON5; ON1, ..., ON6) existiert. Dadurch ist die Rate von falscher Klassifikation verringert.

Fig.1

## Beschreibung

Die Erfindung betrifft eine Vorrichtung zur automatischen Klassifikation von Objekten mittels Doppler-verbreiterter Radarecho-Signale nach dem Oberbegriff des Patentanspruches 1 und ein Verfahren zur Klassifikation von Objekten nach Patentanspruch 7.

Aus einem Aufsatz von J. Martinez Madrid et al, ("A Neural Network Approach to Doppler-Based Target Classification", Universidad Politécnica de Madrid, Spanien, Seiten 450 bis 453) ist eine Vorrichtung zur Klassifikation von Objekten in Zielklassen mittels Doppler-verbreiterter Radarecho-Signale bekannt. Die Vorrichtung nutzt ein neuronales Netz vom Typ Multi-Layer Perceptron mit einer Eingangsschicht aus Eingangsknoten für Merkmale der Doppler-verbreiterten Radarecho-Signale, verborgenen Schichten und einer Ausgangsschicht aus Ausgangsknoten. In dem Aufsatz ist beschrieben, daß das neuronale Netz für die genannte Anwendung genau so viele Ausgangsknoten haben sollte wie Zielklassen. Weiter wird ausgeführt, daß die Verwendung von mehr als vier Zielklassen zu einer schlechteren Leistung bei der Klassifikation führt.

Eine nach einem anderen Prinzip arbeitende Vorrichtung zur Klassifikation von Objekten ist in einem Artikel von M. Menon ("An Automatic Ship Classification System for ISAR Imagery", SPIE Vol 2492 1995, Seiten 373 bis 388) beschrieben. Sie dient dazu, Schiffe an Hand digitalisierter Videobilder eines ISAR-Radargerätes unter Verwendung eines neuronalen Netzes vom Typ Adaptive Clustering Network in Schiffsklassen einzuteilen. Dem neuronalen Netz werden Merkmalsvektoren verschiedener Videobilder präsentiert. Während einer Trainingsphase erzeugt das neuronale Netz verschiedene Gruppen für die verschiedenen Ansichten ein und desselben Objektes, wobei auch ähnliche Merkmalsvektoren verschiedener Objekte zu einer Gruppe zusammengefaßt werden. Eine Gruppe kann daher Merkmalsvektoren von Mitgliedern verschiedener Schiffsklassen enthalten und wird entweder der mehrheitlich vertretenen Schiffsklasse zugeordnet oder als Klasse unbekannter Objekte behandelt.

Die im Stand der Technik bekannten Vorrichtungen zur Klassifikation von Objekten haben den Nachteil, daß sie relative hohe Raten von falscher Klassifikation aufweisen.

Aufgabe der Erfindung ist es, eine Vorrichtung und ein Verfahren zur automatischen Klassifikation von Objekten anzugeben, welche gegenüber dem Stand der Technik eine geringere Rate von falscher Klassifikation aufweisen.

Die Aufgabe wird hinsichtlich der Vorrichtung gelöst durch die Merkmale des Patentanspruches 1 und hinsichtlich des Verfahrens durch die Merkmale des Patentanspruches 7. Vorteilhafte Ausgestaltungen sind den abhängigen Patentansprüchen zu entnehmen.

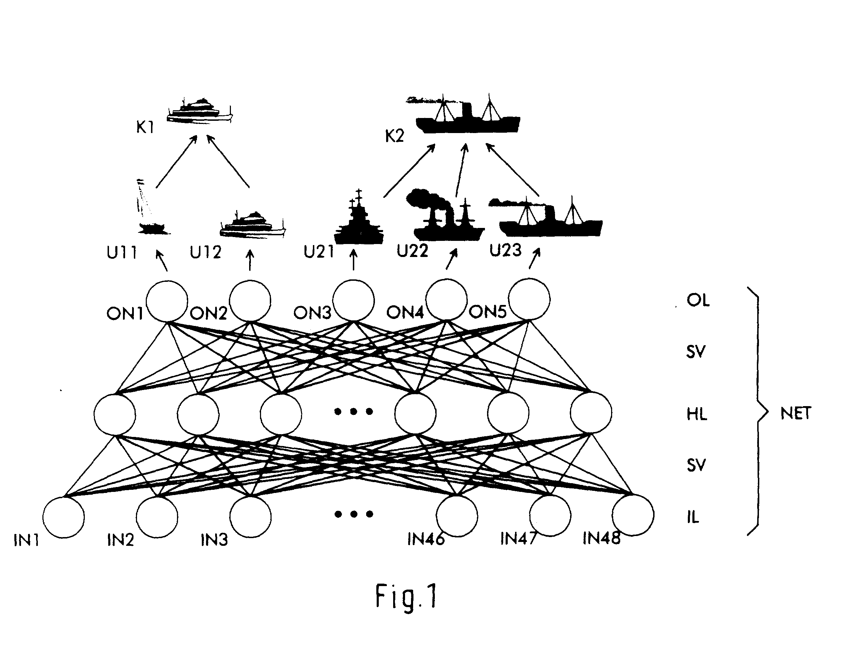

Im folgenden wird die Erfindung anhand der Figuren 1 bis 3 und zwei Ausführungsbeispielen erläutert.

Es zeigen:

| Figur 1 | eines schematische Darstellung eines neuronalen Netzes eines ersten Ausführungsbeispieles, |
| Figur 2a und 2b | zwei Diagramme mit Merkmalen der Doppler-verbreiterter Radarecho-Signale und |
| Figur 3 | eine schematische Darstellung eines neuronalen Netzes eines zweiten Ausführungsbeispieles. |

Grundlage der Erfindung ist die Klassifikation von Objekten an Hand von Doppler-verbreiterten Radarecho-Signalen. Ausgesendete Radarsignale werden von einem bewegten Objekt, welches zu klassifizieren ist, reflektiert. Durch den Doppler-Effekt ist das reflektierte Radarsignal gegenüber dem ausgesandten Radarsignal in der Frequenz verschoben und verbreitert. Während die Frequenzverschiebung charakteristisch ist für die Geschwindigkeit des Objektes in Richtung radial zum Radarsender, ist die spektrale Verbreiterung charakteristisch für innere Bewegungen des Objektes, wie beispielsweise Vibrationen durch ein Antriebsaggregat oder die Rotation eines Propellers oder einer Antriebswelle. Die für ein Objekt charakteristische spektrale Verbreiterung wird als Dopplersignatur bezeichnet und stellt als Differenz zwischen reflektiertem und ausgesandtem Radarsignal ein akustisches Tonsignal dar. Klassifikation eines Objektes bedeutet in diesem Zusammenhang, daß ein Objekt erkannt und einer bestimmten Klasse aus einer Reihe vorgegebener Klassen von Objekten zugeordnet wird. Die Klassifikation erfolgt unter Verwendung eines neuronalen Netzes.

Die Erfindung macht sich Erkenntnisse zunutze, über die Auswirkung verschiedener Topologien und Trainingsmethoden neuronaler Netze auf das Klassifikationsergebnis. Bei einem neuronalen Netz mit einer großen Zahl Ausgangsknoten ist die Wahrscheinlichkeit eines falschen Klassifikationsergebnisses, d. h. daß ein Objekt einer falschen Klasse zugeordnet wird, größer als bei einem neuronalen Netz mit einer kleineren Anzahl Ausgangsknoten und demzufolge größeren Klassen. Erstaunlicherweise ist jedoch bei einem neuronalen Netz mit einer größeren Anzahl Ausgangsknoten die Wahrscheinlichkeit, daß das neuronale Netz die Entscheidung trifft, es wäre kein Objekt vorhanden oder es handele sich um ein unerwünschtes Störobjekt, kleiner als bei einem neuronalen Netz mit einer kleineren Anzahl Ausgangsknoten.

Ein Grundgedanke der Erfindung liegt nun darin, zur Klassifikation ein neuronales Netz mit Ausgangsknoten für Klassen einzusetzen, die Klassen, denen die zu klassifizierenden Objekten zugeordnet werden können, in Unterklassen zu unterteilen, für jede der Unterklassen einen eigenen Ausgangsknoten vorzusehen und jeden Ausgangsknoten mit einem bestimmten Satz von Trainingsdaten für sich zu trainieren. Zusätzlich können neben Ausgangsknoten für Klassen zusätzliche Ausgangsknoten für unerwünschte Störobjekte vorgesehen sein.

Ein neuronales Netz besteht aus Knoten und synaptischen Verbindungen zwischen den Knoten. Den synaptischen Verbindungen sind Gewichte zugewiesen, die durch ein Training mit Trainingsdaten festgelegt sind. Die Knoten zeigen eine Aktivierung als Ergebnis von Eingangsdaten. Das neuronale Netz ist in verschiedene hierarchisch angeordnete Schichten unterteilt, wobei jeder Knoten einer unteren Schicht mit jedem Knoten einer oberen Schicht über synaptische Verbindungen verbunden ist. Ein neuronales Netz mit dieser Topologie wird als Multi-Layer Perceptron bezeichnet. Die Knoten erhalten als Eingangsdaten die Aktivierung der Knoten der nächst niedrigeren Schicht, multipliziert mit dem Gewicht der jeweiligen synaptischen Verbindung. Demnach ergibt sich die Aktivierung $y_n$ eines Knotens $N_n$ nach einer Formel vom Typ:

$$y_n = f(\sum_i w_{in} x_i)$$

wobei f() eine vorgegebene Funktion, $x_i$ die Aktivierung des i-ten Knotens $N_i$ und $w_{in}$ das Gewicht der synaptischen Verbindung zwischen dem i-ten Knoten $N_i$ und dem n-ten Knoten $N_n$ ist. Die Eingangsdaten der Knoten der untersten, als Eingangsschicht bezeichneten Schicht sind Merkmale der Doppler-verbreiterten Radarecho-Signale und aus der Aktivierung der Knoten der obersten, als Ausgangsschicht bezeichneten Schicht ermittelt sich das Klassifikationsergebnis.

In Figur 1 ist ein neuronales Netz eines ersten Ausführungsbeispieles schematisch dargestellt. Es hat eine Eingangsschicht IL aus einer Anzahl von Eingangsknoten IN1, .., IN48, an denen dem Netz Merkmale eines Doppler-verbreiterten Radarecho-Signales präsentiert werden, eine verborgene Schicht HL und eine Ausgangsschicht OL aus fünf Ausgangsknoten ON1, ... ON5. Jeder Ausgangsknoten ON repräsentiert eine Unterklasse. In dem Ausführungsbeispiel ist das neuronale Netz für die Klassifikation von Objekten auf See in zwei Klassen K1 und K2 trainiert. Die Unterklassen U11 und U12 repräsentieren kleine Segelboote und Motorjachten und gehören zu der Klassen K1 der kleinen Schiffe. Die Unterklassen U21, U22 und U23 repräsentieren Dampfer, Containerschiffe und Passagierschiffe und gehören zu der Klasse K2 der großen Schiffe. Ein Klassifikationsergebnis für ein Objekt kann nun eine der folgenden Entscheidungen sein: Objekt gehört zur Klasse K1 der kleinen Schiffe, Objekt gehört zur Klasse K2 der großen Schiffe, oder es ist kein Objekt vorhanden.

In dem Ausführungsbeispiel wird ein von einem Objekt reflektiertes Radarsignal durch eine Demodulation von der Trägerfrequenz eines ausgesandten Radarsignales befreit. Durch diesen Verarbeitungsschritt entsteht ein analoges Tonsignal mit einem Frequenzbereich von 0 bis 2 kHz. Das analoge Tonsignal wird mit einer Abtastfrequenz von beispielsweise 4 kHz abgetastet. Dadurch werden je nach Dauer des Signales eine Anzahl Signalwerte erhaltenen, im Ausführungsbeispiel sind dies 256. Die 256 Signalwerte werden mit Hilfe einer diskreten Fouriertransformation, beispielsweise der FFT (Fast Fourier Transformation), in den Frequenzraum abgebildet. Die Darstellung erfolgt durch 257 Betragskoeffizienten. Da das transformierte Spekrum symmetrisch ist, brauchen nur die Hälfte, d.h. 129 Betragskoeffizienten betrachtet zu werden. Diese werden quadriert, logarithmiert und anschließen mit Hilfe einer Fourierrücktransformation auf 128 Koeffizienten im Zeitraum abgebildet. Eine solche Darstellung wird als Cepstrum bezeichnet und die Koeffizienten heißen Cepstralkoeffizienten. Die Darstellung der Dopplersignatur als Cepstrum ist vorteilhaft, da mit dieser Darstellung eine besonders sichere Klassifikation unter Verwendung eines neuronalen Netzes möglich ist.

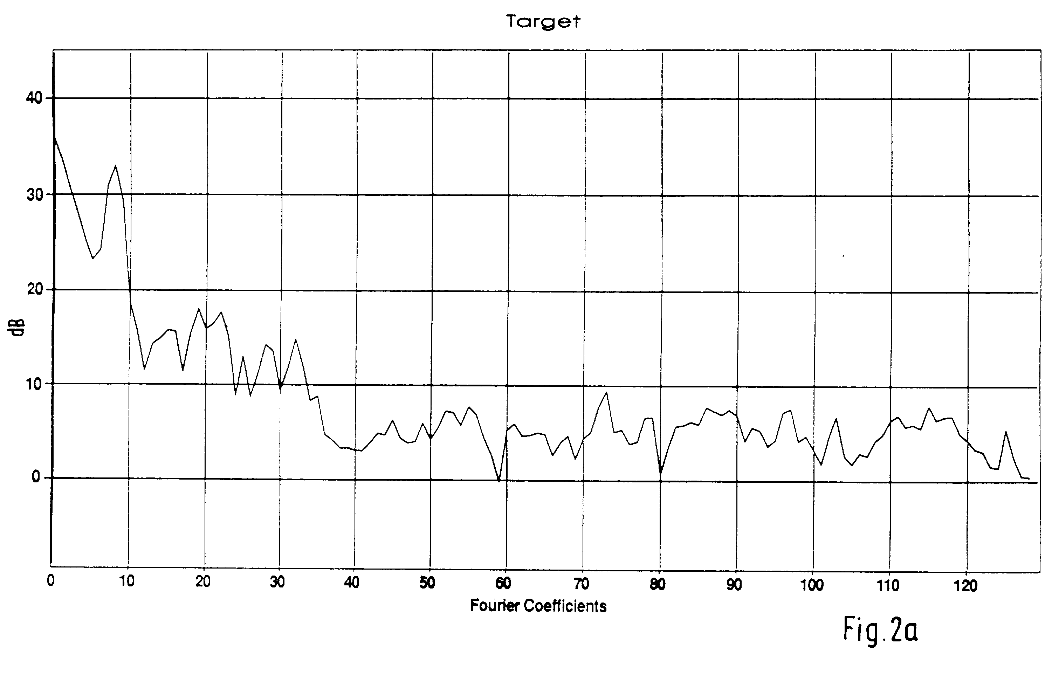

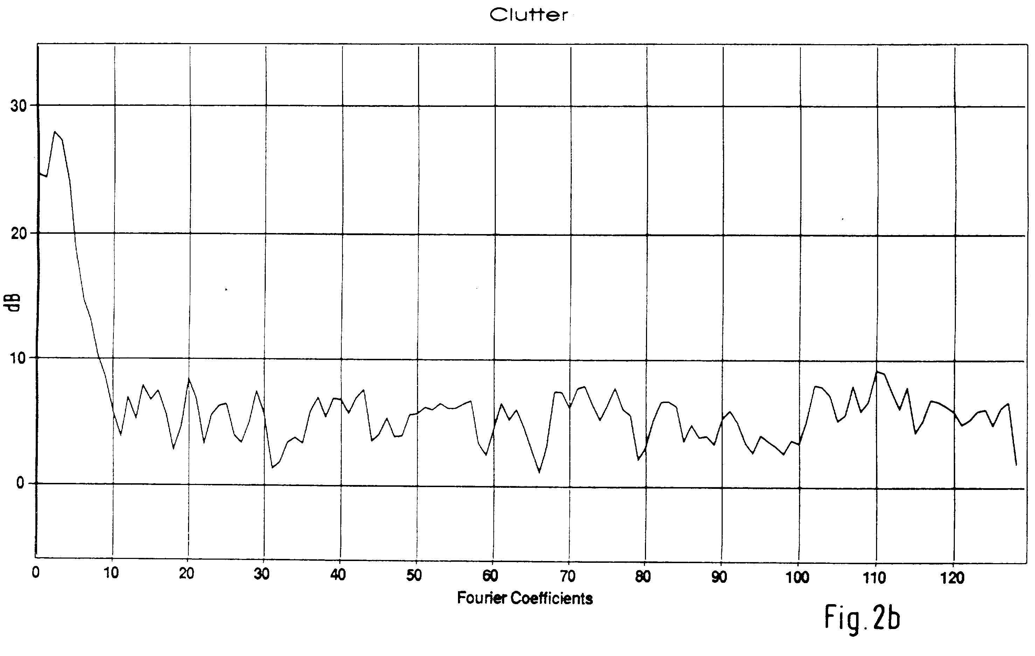

In Figur 2a und 2b sind zwei Frequenzspektren dargestellt. Auf der horizontalen Achse ist dabei die Nummer der 129 Betragskoeffizienten aufgetragen, auf der vertikalen Achse deren Wert in dB nach Betragsbildung, Quadrierung und Logarithmierung. Gezeigt ist jeweils nur eine Hälfte des zum Nullpunkt symmetrischen Spektrums. Bei den beiden Spektren handelt es sich in Figur 2a um ein Objekt, beispielsweise um ein Schiff, und in Figur 2b um Clutter, das sind Reflexionen an Wellen und Gischt. Die höheren Koeffizienten sind stark durch Rauschen geprägt und können für die Klassifikation weggelassen werden. Dem entsprechend werden auch nur die ersten Cepstralkoeffizienten verwendet. Im Ausführungsbeispiel werden entsprechend der Anzahl Eingangsknoten des neuronalen Netzes die ersten 48 Cepstralkoeffizienten zur Klassifikation verwendet.

Dem in Figur 1 gezeigten neuronalen Netz werden die ersten 48 Cepstralkoeffizienten als Merkmale des Doppler-verbreiterten Radarecho-Signales an den 48 Eingangsknoten IN1,..., IN48 präsentiert. Als Antwort des neuronalen Netzes tritt eine Aktivierung an den Ausgangsknoten ON1, ... ON5 auf, die ein Maß dafür ist, ob das Objekt, von dem das Radarsignal reflektiert wurde, zu der Klasse gehört, die der jeweilige Ausgangsknoten repräsentiert. Die Aktivierung ist eine Zahl im Bereich von 0 bis 1. Wird ein Objekt einer Klasse zugeordnet, so weist der zugehörige Ausgangsknoten eine erhöhte Aktivierung im Bereich von 1 auf, während die anderen Ausgangsknoten eine Aktivierung im Bereich von 0 aufweisen. Als Klassifikationsergebnis wird im Falle, daß ein zu klassifizierendes Objekt vorhanden ist, der Name der Klasse mit der stärksten Aktivierung gemeldet, anderenfalls wird gemeldet, es sei kein Objekt vorhanden.

Eine Klassifikation durch das neuronale Netz erfolgt dergestalt, daß aus vergangenen gespeicherten Klassifikationsergebnissen auf zukünftige geschlossen wird. Dazu ist das Netz mit Trainingsdaten von verschiedenen Objekten aller Unterklassen trainiert. Dabei wurden dem neuronalen Netz die Trainingsdaten sooft präsentiert, bis das Netz durch Variation der Gewichte der synaptischen Verbindungen gelernt hatte, alle Trainingsdaten richtig zuzuordnen. Die Trainingsdaten sind ebenfalls nach dem oben beschriebenen Verfahren zu Cepstralkoeffizienten aufbereitet. Das Training erfolgt nach einen Algorithmus, wie beispielsweise dem Error-Backpropogation Algorithmus, der in dem Aufsatz von J. Martinez Madrid et al, ("A Neural Network Approach to Doppler-Based Target Classification", Universidad Politécnica de Madrid, Spanien, Seiten 450 bis 453) beschrieben ist. Bei dem Training wurden alle Ausgangsknoten für sich trainiert, d.h. daß dem neuronalen Netz für jede Unterklasse Trainingsdaten von Objekten, die der jeweiligen Unterklasse angehören, antrainiert wurden, bis das Netz alle Trainingsdaten sicher der richtigen Unterklasse zuordnen konnte. Im Betrieb hingegen sind die Unterklassen zu Klassen zusammengefaßt. Die durch das Training einmalig bestimmten Gewichte der synaptischen Verbindungen können im Anschluß an das Training ausgelesen werden um die Topologie des Netzes in beliebiger Stückzahl zu reproduzieren. Dadurch muß also nicht jede einzelne Vorrichtung trainiert werden.

Eine weitere Möglichkeit für das Training ist, den in "The Cascade-Correlation Learning Architecture", Scott I. Fahlman und Christian Lebiere, August 29 1991, School of Computer Science Carnegie Mellon University Pittsburg, PA 15213 beschriebenen Algorithmus für kaskadenkorrelierte Netze zu verwenden. Nach dieser Methode wird das neuronale Netz während des Trainings erzeugt, d.h. daß durch das Training sowohl die Gewichte der synaptischen Verbindungen wie auch die Topologie des Netzes festgelegt werden.

Ausgesandte Radarsignale können auch an unerwünschten Störobjekten reflektiert werden und so zu einer falschen Klassifikation und einem Fehlalarm führen. Insbesondere in der Umgebung eines Ozeans treten Störobjekte auf, wie z.B. durch Seegang bewegte Seezeichen aber auch Wellen und Gischt an sich. Zur Unterdrückung solcher unerwünschter Störobjekte sind in einem zweiten Ausführungsbeispiel zusätzliche Ausgangsknoten für die Störobjekte vorgesehen.

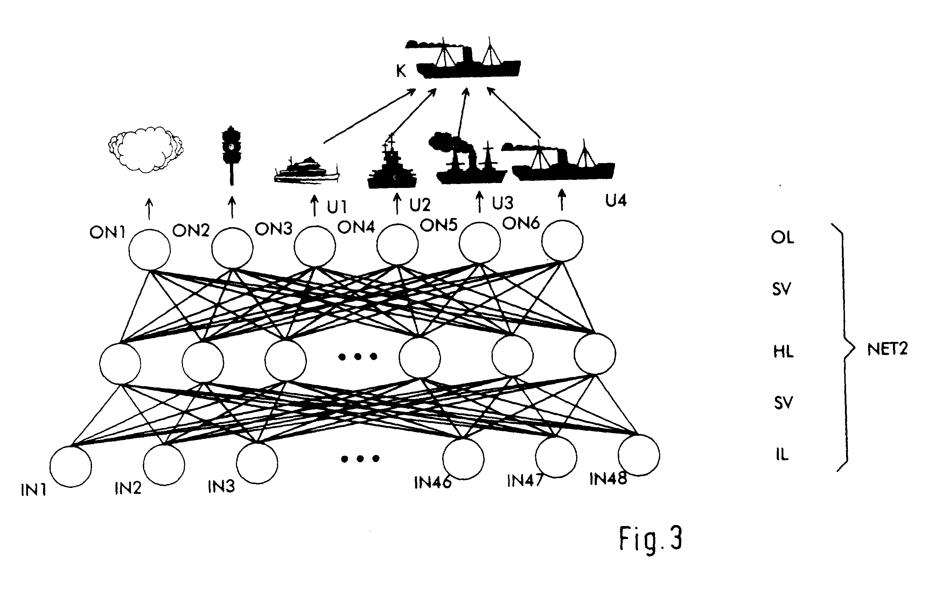

In Figur 3 ist das neuronale Netz NET2 des zweiten Ausführungsbeispieles dargestellt. Das Netz NET2 weist wie im ersten Ausführungsbeispiel eine Eingangsschicht IL mit 48 Eingangsknoten IN1,..., IN48 und eine verborgene Schicht HL auf. Die Ausgangsschicht OL besteht im zweiten Ausführungsbeispiel aus sechs Ausgangsknoten ON1, ..., ON6. Alle Knoten einer Schicht sind über synaptische Verbindungen SV mit allen Knoten einer darunterliegenden Schicht verbunden. Zwei Ausgangsknoten sind zur Unterdrückung unerwünschter Störobjekte vorgesehen und auf diese Störobjekte trainiert, und zwar auf Clutter G1 und auf Seezeichen G2. Als Clutter werden Reflexionen an Wellen und Gischt bezeichnet. Falls ein unerwünschtes Störobjekt, beispielsweise ein Seezeichen vorhanden ist, reagiert zwar der Ausgangsknoten ON2, der auf Seezeichen trainiert ist, mit einer erhöhten Aktivierung, diese Reaktion wird jedoch nicht beachtet, da es sich um einen der zusätzlichen Ausgangsknoten für unerwünschte Störobjekte handelt. Dadurch ist die Klassifikation unerwünschter Störobjekte unterdrückt.

Die restlichen vier Ausgangsknoten repräsentieren eine Klasse K der Schiffe. Die Klasse K ist in vier Unterklassen U1,..., U4 unterteilt und zwar in Motorjachten U1, Passagierschiffe U2, Dampfer U3 und Containerschiffe U4. Eine erhöhte Aktivierung an einem der vier Knoten führt zu dem Klassifikationsergebnis "Schiff vorhanden!", während eine erhöhte Aktivierung an einem der zusätzlichen Ausgangsknoten ON1, ON2 für unerwünschte Störobjekte wie auch der Fall, daß kein Ausgangsknoten eine erhöhte Aktivierung zeigt zu dem Klassifikationsergebnis "Kein Schiff vorhanden!" führt. In dem zweiten Ausführungsbeispiel bedeutet Klassifikation also, daß erkannt wird ob ein Schiff vorhanden ist oder nicht. Ist ein Schiff vorhanden, so kann beispielsweise ein Alarm ausgelöst werden.

Durch die Unterteilung der Klassen in Unterklassen, ist die Wahrscheinlichkeit für einen Fehlalarm, d.h. daß Störungen beispielsweise durch Wellen oder Gischt zu einer fälschlichen Klassifikation der Störung als Schiff führen, stark reduziert. Im zweiten Ausführungsbeispiel liegt die Rate für Fehlalarm bei nur 1%, während die Fehlalarmrate bei der Verwendung eines mit dem selben Trainingsdatensatz trainierten neuronalen Netzes vom Typ eines dreischichtigen Multi-Layer Perceptron, das keine Ausgangsknoten für unerwünschte Störobjekte aufweist und bei dem die Klasse der Schiffe nicht in vier Unterklassen unterteilt ist, bei etwa 4% lag.

In den beiden Ausführungsbeispielen besteht das neuronale Netz aus drei Schichten, wobei jeweils zwischen der Eingangsschicht und der Ausgangsschicht eine verborgene Schicht angeordnet ist. Denkbar ist auch der Einsatz von zwei oder mehr verborgenen Schichten. Allerdings steigt dabei der Rechenaufwand, der nötig ist, um die Aktivierung der einzelnen Knoten der Schichten zu berechnen, ohne daß mit einer Topologie mit mehr als einer verborgenen Schicht wesentlich bessere Klassifikationsergebnisse erzielt werden. Der Einsatz eines neuronalen Netzes mit drei Schichten ist daher bevorzugt.

In der erfindunggemäßen Vorrichtung kann das neuronale Netz durch parallel arbeitende, vernetzte Mikroprozessoren ausgeführt sein. Alternativ ist aber auch eine Ausführung mit nur einem Mikroprozessor möglich, der die einzelnen Knoten des neuronalen Netzes sequentiell abarbeitet.

**Patentansprüche**

1. Vorrichtung zur automatischen Klassifikation von Objekten mittels Doppler-verbreiterter Radarecho-Signale, welche ein neuronales Netz (NET; NET2) mit einer Eingangsschicht (IL) aus Eingangsknoten (IN1,..., IN48) für Merkmale der Doppler-verbreiterten Radarecho-Signale und einer Ausgangsschicht (OL) aus Ausgangsknoten (ON1, ..., ON5; ON1,..., ON6) für Klassen (K1, K2; K), denen die Objekte zugeordnet werden können, hat, **dadurch gekennzeichnet**, daß

- mindestens eine der Klassen (K1, K2; K) in mehrere Unterklassen (U11, U12, U21, U22, U23; U1,..., U4), unterteilt ist und für jede Unterklasse (U11, U12, U21, U22, U23; U1,..., U4) ein Ausgangsknoten (ON1, ..., ON5; ON1, ..., ON6) existiert, daß
- jede Unterklasse (U11, U12, U21, U22, U23; U1,..., U4) für sich trainiert ist, und daß
- die Unterklassen (U11, U12, U21, U22, U23; U1,..., U4) im Betrieb zu den Klassen (K1, K2; K) zusammengefaßt sind

2. Vorrichtung gemäß Anspruch 1, bei der das neuronale Netz (NET; NET2) mindestens einen zusätzlichen Ausgangsknoten (ON1, ON2) für Störobjekte aufweist, die nicht klassifiziert werden.

3. Vorrichtung gemäß Anspruch 1, bei der das neuronale Netz (NET; NET2) ein Multi-Layer Perceptron ist.

4. Vorrichtung gemäß Anspruch 1, bei der das neuronale Netz (NET; NET2) ein Netz aus drei Schichten (IL, HL, OL) ist und zwischen der Eingangsschicht (IL) und der Ausgangsschicht (OL) eine verborgene Schicht (HL) angeordnet ist.

5. Vorrichtung gemäß Anspruch 1, bei der das neuronale Netz (NET; NET2) zur Klassifikation von Cepstren vorgesehen ist, die aus den Doppler-verbreiterten Radarecho-Signalen abgeleitet sind.

6. Verwendung der Vorrichtung gemäß Anspruch 1 zur Klassifikation von Objekten in der Umgebung eines Ozeans in mindestens eine Klasse von Schiffen.

7. Verfahren zur automatischen Klassifikation von Objekten mittels Doppler-verbreiterter Radarecho-Signale, bei dem zur Klassifikation ein neuronales Netz (NET; NET2) verwendet wird, das Ausgangsknoten (ON1, ..., ON5; ON1, ..., ON6) für Unterklassen (U11, U12, U21, U22, U23; U1, ...,U4) aufweist, mit den Schritten:

- Berechnen von Merkmalen des Doppler-verbreiterten Radarecho-Signales,
- Präsentieren der Merkmale an Eingangsknoten (IN1, ..., IN48) einer Eingangsschicht (IL) des neuronalen Netzes (NET; NET2),

- Zuordnen des Objektes zu einer der Unterklassen (U11, U12, U21, U22, U23; U1,..., U4), indem die Aktivierung (ON1,..., ON5; ON1, ..., ON6) der Ausgangsknoten bestimmt und das Objekt der Unterklasse zugeordnet wird, deren zugehöriger Ausgangsknoten die stärkste Aktivierung ausweist und
- aus einer Reihe vorgegebener Klassen (K1, K2; K) Feststellen einer Klasse, zu der die Unterklasse gehört, der das Objekt zugeordnet wurde.

Fig.1

Fig.2a

EP 0 845 685 A2

Fig. 2b

Fig.3